# FASCICULE DE BREVET EUROPEEN

(11) **EP 0 688 944 B1**
(45) Date de publication et mention de la délivrance du brevet: **30.07.1997**
(21) Numéro de dépôt: 95401382.7
(22) Date de dépôt: 14.06.1995
(51) Int. Cl.: F02D 13/02, F02B 27/04

(54) **Moteur à combustion interne à cycle deux temps**
Zweitaktbrennkraftmaschine
Two stroke combustion engine

(30) Priorité: 23.06.1994 FR 9407727
(43) Date de publication de la demande: 27.12.1995
(73) Titulaire: AUTOMOBILES PEUGEOT, 75116 Paris (FR); AUTOMOBILES CITROEN, 92200 Neuilly-sur-Seine (FR); REGIE NATIONALE DES USINES RENAULT, 92109 Boulogne-Billancourt (FR)
(72) Inventeur: Bultel, Franck, F-78000 Versailles (FR)
(74) Mandataire: Robert, Jean-François

(56) Documents cités:
- EP-A- 0 212 857
- EP-A- 0 396 262
- EP-A- 0 413 316
- EP-A- 0 457 753
- DE-U- 8 617 390
- FR-A- 2 552 161

## Description

L'invention se rapporte au domaine des moteurs à combustion interne, notamment pour véhicules automobiles, et concerne plus particulièrement les moteurs à cycle deux temps à carter pompe.

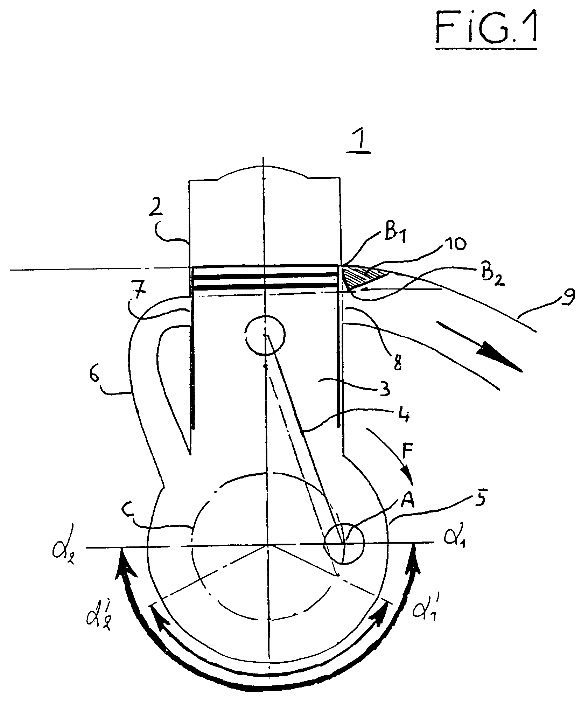

On rappellera tout d'abord le principe de fonctionnement d'un moteur deux temps à carter pompe en référence à la figure 1 qui est une vue schématique en coupe verticale d'un tel moteur.

Le moteur représenté à la figure 1 comprend, de manière connue, un carter 1 dans lequel est ménagé au moins un cylindre 2 définissant une chambre de combustion et à l'intérieur duquel coulisse un piston 3 relié par une bielle 4 à un vilebrequin non représenté.

Le cercle en traits mixtes C représente le parcours du point d'attache A de la bielle sur ce dernier au cours d'un cycle du moteur, le sens de rotation étant indiqué par la flèche F.

L'injection de carburant est de préférence directe et l'allumage est obtenu par un moyen classique tel qu'une bougie d'allumage (non représentée).

Le vilebrequin tourne à l'intérieur d'un carter 5 relié par une conduite 6 au cylindre 2, la conduite 6 débouchant dans celui-ci par une lumière d'admission 7. L'air frais est admis dans le carter 5 par aspiration lors de la course de remontée du piston, ce dernier bouchant la lumière d'admission 7 pendant la presque totalité de cette course.

Lorsque le piston redescend, il comprime l'air contenu dans le carter. A la fin de sa course de descente, il découvre d'abord une lumière d'échappement 8 communiquant avec un conduit d'échappement 9, puis à peu près simultanément la lumière d'admission 7. L'air comprimé dans le carter pénètre alors dans le cylindre par la conduite 6 et la lumière d'échappement 7 et chasse les gaz brûlés à travers la lumière d'échappement.

Lorsque le piston remonte à nouveau, il bouche les lumières d'admission 7 et d'échappement 8 et comprime la masse de gaz jusqu'à ce que l'allumage se produise, provoquant une nouvelle descente du piston, et ainsi de suite.

On voit encore sur la figure 1 que le moteur peut être à diagramme d'échappement fixe ou variable, le "diagramme d'échappement" pouvant être défini comme l'angle parcouru par le point A sur le cercle C lorsque la lumière d'échappement est découverte (partiellement ou totalement) par le piston.

Si celle-ci est de dimensions fixes, l'angle est toujours le même et l'on a un diagramme d'échappement fixe.

Cependant, on peut prévoir de modifier la section de passage suivant la direction axiale du cylindre en fonction de l'état du moteur afin d'améliorer les performances de celui-ci. Pour cela, on peut utiliser l'obturateur 10 illustré à la figure 1. Lorsque celui-ci est en position complètement relevée, la lumière d'échappement commence à être dégagée lorsque la face supérieure du piston arrive en face du point B₁ et le diagramme d'échappement correspond à l'angle α₁α₂. Au contraire, lorsque l'obturateur est dans sa position la plus basse, qui est celle illustrée sur la figure 1, la lumière d'échappement n'est découverte que lorsque la face supérieure du piston arrive en face du point B₂ et le diagramme d'échappement correspond à l'angle α'₁α'₂ : on a donc réalisé un moteur à diagramme d'échappement variable, fonction de la position de l'obturateur 10.

Il est connu que, pour les moteurs à combustion interne, les performances en matière de couple sont directement liées à la masse d'air frais emprisonnée dans le cylindre, c'est-à-dire que le couple obtenu est d'autant plus grand que la masse d'air enfermée est plus importante. Il est facile d'optimiser un moteur, c'est-à-dire de rechercher le meilleur remplissage en air pour un régime donné, mais dans le cas des moteurs deux temps, cela n'est valable que pour un régime particulier, dit "régime d'accord", qui va être défini ci-après.

Lorsque l'air frais pénètre dans le cylindre, il se mélange plus ou moins aux gaz brûlés et une partie de cet air frais s'évacue dans le conduit d'échappement 9 tandis qu'une partie des gaz brûlés reste dans le cylindre, ce qui diminue les performances du moteur. Il est donc souhaitable de ramener dans le cylindre une partie des gaz qui s'en échappent afin d'augmenter la masse d'air frais. Il existe un régime particulier, fonction de la géométrie du moteur et des conduits d'échappement, pour lequel l'onde acoustique générée par les gaz sortant d'un cylindre favorise le retour dans un autre cylindre des gaz qui viennent de s'en échapper: c'est ce régime qui est appelé régime "d'accord".

Diverses solutions on été proposées pour améliorer le fonctionnement des moteurs deux temps, notamment avec des diagrammes variables. Par exemple, la demande de brevet français 93.08251 déposée le 6 Juillet 1993 décrit un moteur de ce type dans lequel un boisseau rotatif situé au niveau de la lumière d'échappement permet d'une part d'en faire varier la section suivant la direction axiale du cylindre, créant ainsi le diagramme variable, et d'autre part de diriger sélectivement les gaz d'échappement vers la conduite principale ou une conduite secondaire équipée d'un catalyseur d'amorçage.

Le rôle de ce dernier est de convertir par oxydation les hydrocarbures et le CO contenu dans les gaz d'échappement et ce dès les plus basses températures, c'est-à-dire lorsque le moteur est froid en période de démarrage. La réaction étant exothermique, les gaz se réchauffent, ce qui permet d'obtenir un préchauffage du catalyseur principal (lequel ne fonctionne qu'à chaud). On notera encore que le catalyseur d'amorçage ne convient que pour un débit massique de gaz faible : au-delà d'un certain débit, la conversion ne se fait plus et le catalyseur principal prend le relais.

L'invention a pour but de perfectionner de tels moteurs en proposant un moteur deux temps équipé d'un système qui permet d'en améliorer encore le remplissage en air frais tout en étant d'une construction simple et donc industrialisable facilement.

Le moteur objet de l'invention est du type décrit dans la demande de brevet précitée, c'est-à-dire comprenant un carter dans lequel est agencé au moins un cylindre définissant une chambre de combustion, ce cylindre présentant au moins une lumière d'admission par où pénètrent les gaz frais et au moins une lumière d'échappement par où sont évacués les gaz brûlés, cette dernière communiquant avec une ligne d'échappement par l'intermédiaire de deux conduits d'échappement distincts, un boisseau rotatif apte d'une part à modifier la section de passage de la lumière d'échappement en obturant plus ou moins celle-ci suivant la direction axiale du cylindre et d'autre part à diriger sélectivement les gaz brûlés ver l'un ou l'autre desdits conduits étant interposé entre la lumière d'échappement et ces conduits.

Selon l'invention, ce moteur comprend en outre un résonateur communiquant avec l'un et/ou l'autre conduit d'échappement, le boisseau étant apte à obturer plus ou moins le résonateur.

On obtient ainsi une construction très simple puisque le boisseau, par une forme appropriée, exerce à lui seul quatre fonctions : variation du diagramme d'échappement, déviation des gaz brûlés vers un catalyseur d'amorçage, effet "papillon" en obturant plus ou moins le conduit principal d'échappement et mise en action et réglage du résonateur, ce qui améliore encore le remplissage en air frais du moteur.

Selon d'autres caractéristiques du moteur objet de l'invention :
- le résonateur se présente sous la forme d'une cavité cylindrique d'axe perpendiculaire à celui du cylindre communiquant avec l'un ou l'autre conduit par un passage de section inférieure à celle de la cavité;
- ledit passage s'étend sensiblement perpendiculairement à la fois à l'axe de la cavité et à celui du cylindre;
- le moteur comportant plusieurs cylindres, un résonateur unique distinct est associé à chaque cylindre;
- le boisseau est piloté par des moyens de commande agissant en fonction de paramètres représentatifs du fonctionnement du moteur;
- lesdits paramètres représentatifs du fonctionnement du moteur sont la charge et/ou le régime;
- le boisseau tourillonne à l'intérieur d'un alésage ménagé dans le carter, cet alésage s'étendant perpendiculairement à l'axe du cylindre et communiquant directement avec la lumière d'échappement, les deux conduits d'échappement et le résonateur;
- le boisseau a une forme telle qu'au cours de sa rotation, il dégage progressivement le deuxième conduit au fur et à mesure qu'il obture le premier, le résonateur étant obturé;
- le boisseau a une forme telle qu'au cours de sa rotation, il découvre progressivement le résonateur au fur et à mesure qu'il obture la lumière d'échappement, le premier conduit étant obturé et le deuxième dégagé;
- le moteur comprenant plusieurs cylindres, les boisseaux correspondants à chaque cylindre se trouvent liés en rotation sur un même arbre;
- les boisseaux font partie intégrante de l'arbre.

L'invention apparaîtra mieux à la lecture de la description qui va suivre, donnée uniquement à titre d'exemple, en référence aux dessins annexés dans lesquels :
- la figure 1 est une vue schématique en coupe partielle verticale d'un moteur à deux temps à carter pompe; et
- les figures 2 à 5 sont des vues de détail partielles du système d'échappement selon l'invention précisant les différents modes de fonctionnement de celui-ci.

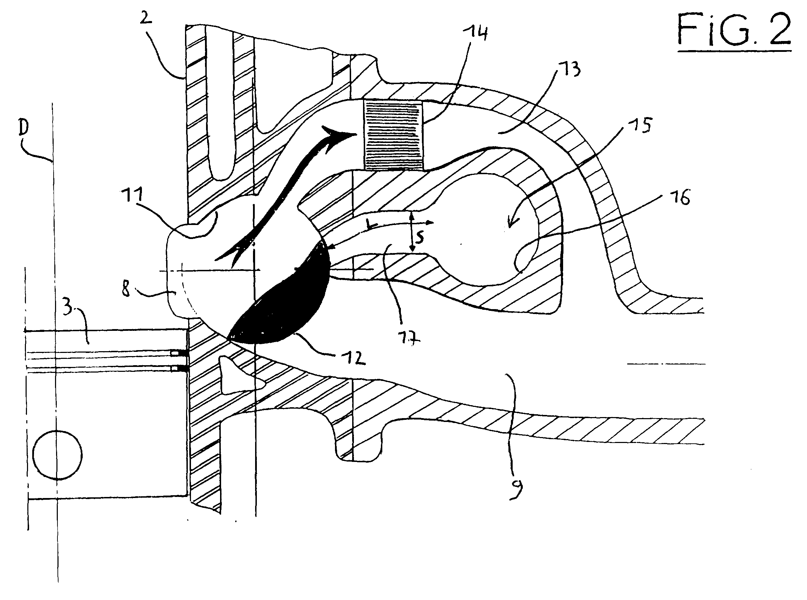

On se reportera d'abord à la figure 2, où a été représentée à échelle agrandie la zone entourant la lumière d'échappement 8. On a également représenté de manière très schématique le piston 3 coulissant dans le cylindre 2. Sur toutes les figures 2 à 5, le piston a été représenté dans une position basse où il découvre totalement la lumière d'échappement 8. Au niveau de celle-ci a été ménagé un alésage cylindrique 11, d'axe perpendiculaire à l'axe D du cylindre, et à l'intérieur duquel tourillonne un boisseau rotatif 12.

L'alésage 11 communique d'une part avec le conduit d'échappement principal 9, d'autre part avec un conduit d'échappement secondaire 13 équipé d'un catalyseur d'amorçage 14 et enfin avec un résonateur 15 qui sera décrit ultérieurement. Pour plus de commodité, dans la présente description, le conduit 13, utilisé dans les périodes de démarrage, sera appelé "premier conduit" et le conduit 9 "deuxième conduit.

Le premier conduit 13 débouche dans le second à une certaine distance en aval de l'alésage 11, en considérant le sens de circulation des gaz d'échappement. Quant au résonateur 15, il se compose essentiellement d'une cavité cylindrique 16, d'axe perpendiculaire à celui du cylindre 2 et parallèle à celui de l'alésage 11, et communiquant avec ce dernier par un passage 17. Ce passage, qui n'est pas nécessairement rectiligne, s'étend suivant une direction sensiblement perpendiculaire à l'axe de la cavité 16. On a désigné par L sa longueur et par S sa section, cette dernière étant inférieure à celle de la cavité 16.

On va maintenant décrire le fonctionnement du système d'échappement objet de l'invention en référence aux figures 2 à 5.

Sur la figure 2, le boisseau 12 est représenté dans une position où il obture complètement le conduit 9 et le passage 17 du résonateur 15 et laisse complètement dégagé le premier conduit 13 ainsi que la lumière d'échappement 8. Cette position convient aux périodes de démarrage lorsque le moteur est froid : les gaz d'échappement passent à travers le catalyseur d'amorçage, ce qui permet de les traiter alors que le catalyseur principal, situé plus loin sur la ligne d'échappement, n'est pas encore opérationnel.

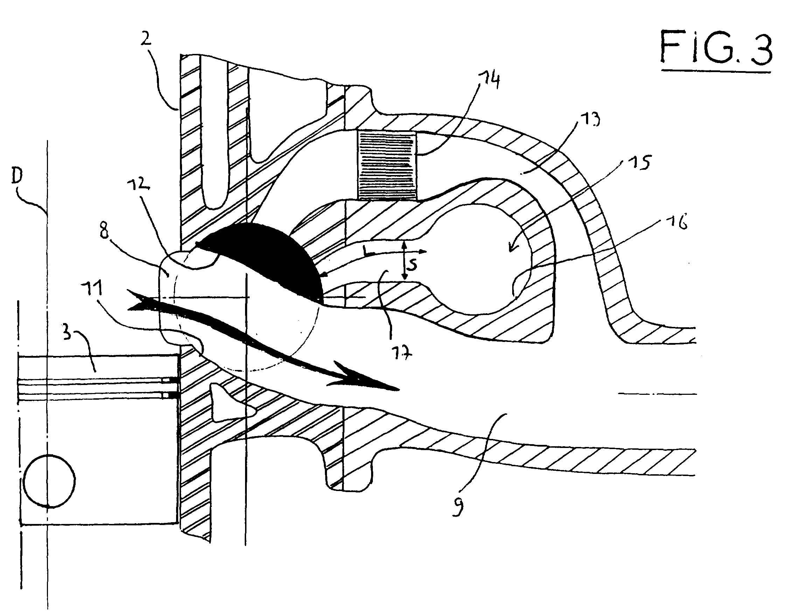

Dans la position illustrée à la figure 3, le boisseau 12 a tourné d'environ 90° dans le sens inverse des aiguilles d'une montre en regardant les figures. Dans cette position, il obture complètement le résonateur 15 et le premier conduit 13 et dégage complètement le conduit 9 et la lumière d'échappement 8. Cette position convient pour un fonctionnement du moteur à haut régime et à forte charge.

Il est à noter qu'au cours de sa rotation, commencée à la fin de la période de démarrage, le boisseau a progressivement ouvert le conduit 9 au fur et à mesure qu'il fermait le conduit 13, le résonateur étant obturé et la lumière d'échappement 8 complètement dégagée.

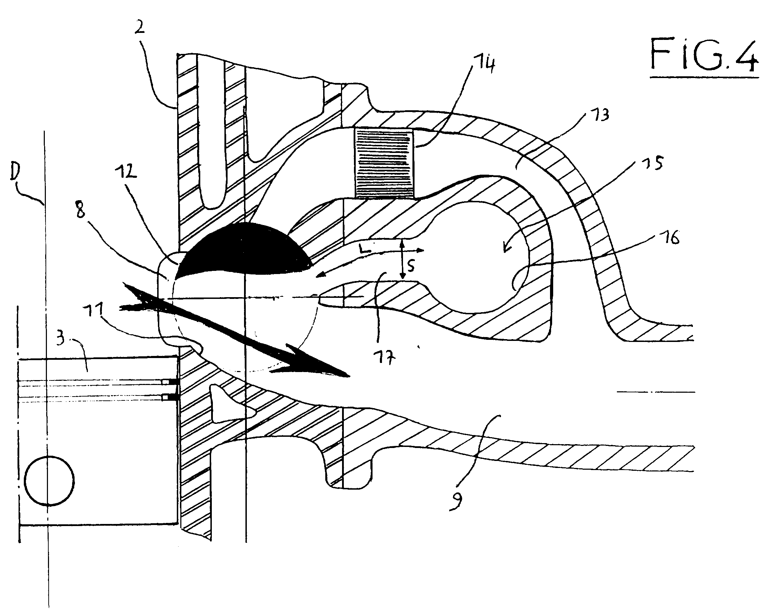

Sur la figure 4, le boisseau a encore tourné dans le sens inverse des aiguilles d'une montre et se trouve dans une position où il dégage le résonateur et obture la partie supérieure de la lumière d'échappement 8, le conduit 13 étant obturé et l'entrée du conduit 9 étant dégagée. Cette position convient pour un fonctionnement du moteur à forte charge et moyen régime.

On remarquera encore que l'obturation de la lumière d'échappement 8 s'est faite progressivement au fur et à mesure que le boisseau dégageait le résonateur.

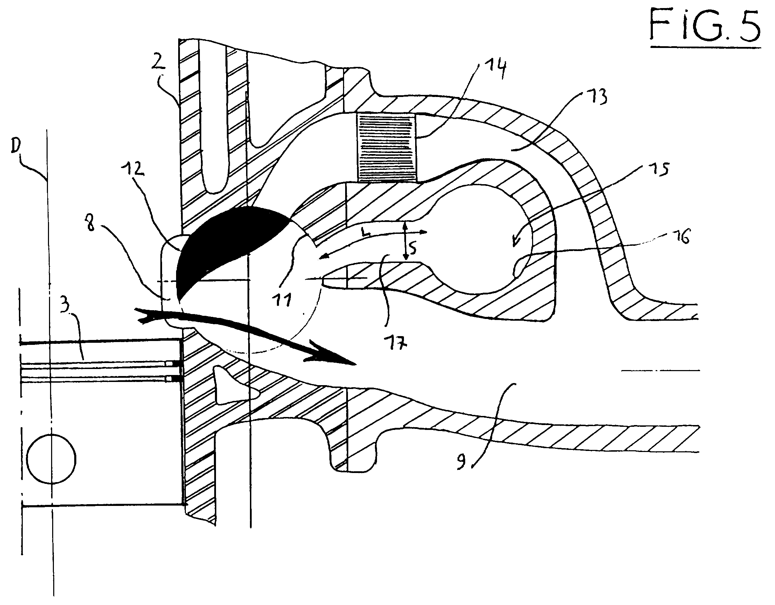

Le boisseau continuant son mouvement, il arrive à la position extrême de la figure 5 où le résonateur est toujours dégagé, ainsi que l'entrée du conduit 9, le premier conduit 13 étant obturé. Cependant, le boisseau a fermé davantage la lumière d'échappement 8 de sorte que les gaz d'échappement ne passent que par la partie inférieure de celle-ci. Cette position convient pour un fonctionnement du moteur à pleine charge et faible régime.

On fera cependant remarquer que la position de la figure 5, comme indiqué ci-dessus, est une position "extrême", c'est-à-dire correspondant à un diagramme d'échappement minimum. De plus, on voit que le boisseau a une forme telle que, s'il continuait à tourner, il dégagerait à nouveau le conduit 13 alors que celui-ci ne doit être en service que pendant les périodes de démarrage. En fait, le boisseau passe progressivement d'une position à une autre au fur et mesure que les paramètres de fonctionnement du moteur évoluent.

Afin d'assurer la meilleure efficacité du système, dans le cas d'un moteur à plusieurs cylindres, chaque cylindre est muni de son résonateur propre afin d'éviter d'éventuelles interférences entre les différents résonateurs.

Quant aux boisseaux, ils se trouvent de préférence sur un même arbre et peuvent même être taillés directement sur celui-ci.

On a donc réalisé suivant l'invention un système extrêmement simple puisqu'une seule pièce, à savoir le boisseau, permet par sa rotation d'adapter le système d'échappement aux besoins du moteur dans toutes les plages de fonctionnement de celui-ci. De plus, on obtient de meilleures performances qu'avec les dispositifs de l'art antérieur, puisque le boisseau permet de contrôler et de combiner au mieux toutes les fonctions suivantes : variation du diagramme d'échappement, déviation sélective des gaz d'échappement, mise en route et réglage du résonateur et fermeture plus ou moins grande de l'entrée du conduit d'échappement.

Enfin, il est bien entendu que l'invention ne se limite pas au seul mode de réalisation décrit et représenté, mais qu'elle en couvre au contraire toutes les variantes. C'est ainsi que l'homme du métier pourra faire varier la forme et les dimensions des éléments constituant le dispositif (notamment le boisseau et le résonateur) ainsi que les lois d'ouverture et de fermeture des différents orifices en fonction des caractéristiques souhaitées pour chaque moteur.

## Revendications

1. Moteur à combustion interne à cycle deux temps, du type à carter pompe, comprenant un carter (1) dans lequel est agencé au moins un cylindre (2) définissant une chambre de combustion, ce cylindre présentant au moins une lumière d'admission (7) par où pénètrent les gaz frais et au moins une lumière d'échappement (8) par où sont évacués les gaz brûlés, cette dernière communiquant avec une ligne d'échappement par l'intermédiaire de deux conduits d'échappement distincts (9,13), un boisseau rotatif (12) apte d'une part à modifier la section de passage de la lumière d'échappement (8) en obturant plus ou moins celle-ci suivant la direction axiale du cylindre (2) et d'autre part à diriger sélectivement les gaz brûlés vers l'un ou l'autre desdits conduits (9,13) étant interposé entre la lumière d'échappement et ces conduits (9,13), caractérisé en ce qu'il comprend en outre un résonateur (15) communiquant avec l'un et/ou l'autre conduit d'échappement, le boisseau (12) étant apte à obturer plus ou moins le résonateur (15).

2. Moteur selon la revendication 1, caractérisé en ce que le résonateur (15) se présente sous la forme d'une cavité cylindrique (16) d'axe perpendiculaire à celui du cylindre (2) communiquant avec l'un et/ou l'autre conduit (9,13) par un passage (17) de section inférieure à celle de la cavité (16).

3. Moteur selon la revendication 2, caractérisé en ce que ledit passage (17) s'étend sensiblement perpendiculairement à la fois à l'axe de la cavité (16) et à celui du cylindre (2).

4. Moteur selon l'une quelconque des revendications 1 à 3, comportant plusieurs cylindres, caractérisé en ce qu'un résonateur unique distinct est associé à chaque cylindre.

5. Moteur selon l'une quelconque des revendications 1 à 4, caractérisé en ce que le boisseau (12) est piloté par des moyens de commande agissant en fonction de paramètres représentatifs du fonctionnement du moteur.

6. Moteur selon la revendication 5, caractérisé en ce que lesdits paramètres représentatifs du fonctionnement du moteur sont la charge et/ou le régime.

7. Moteur selon l'une quelconque des revendications 1 à 6, caractérisé en ce que le boisseau (12) tourillonne à l'intérieur d'un alésage (11) ménagé dans le carter (1), cet alésage (11) s'étendant perpendiculairement à l'axe du cylindre (2) et communiquant directement avec la lumière d'échappement (8), les deux conduits d'échappement (9,13) et le résonateur (15).

8. Moteur selon l'une quelconque des revendications 1 à 7, caractérisé en ce que l'un (13) des deux conduits, appelé "premier conduit", est équipé d'un catalyseur d'amorçage (14).

9. Moteur selon la revendication 8, caractérisé en ce que le boisseau (12) a une forme telle qu'au cours de sa rotation, il dégage progressivement le deuxième conduit (9) au fur et à mesure qu'il obture le premier (13), le résonateur (15) étant obturé.

10. Moteur selon l'une quelconque des revendications 8 et 9, caractérisé en ce que le boisseau (12) a une forme telle qu'au cours de sa rotation, il découvre progressivement le résonateur (15) au fur et à mesure qu'il obture la lumière d'échappement (8), le premier conduit (13) étant obturé et le deuxième (9) dégagé.

11. Moteur selon l'une quelconque des revendications 1 à 10, comprenant plusieurs cylindres, caractérisé en ce que les boisseaux correspondant à chaque cylindre se trouvent liés en rotation sur un même arbre.

12. Moteur selon la revendication 11, caractérisé en ce que les boisseaux font partie intégrante de l'arbre.

## Patentansprüche

1. Zweitaktverbrennungskraftmaschine, vom Typ Pumpengehäuse, mit einem Gehäuse (1), in dem wenigstens ein eine Brennkammer begrenzender Zylinder (2) angeordnet ist, wobei der Zylinder wenigstens eine Einlaßöffnung (7), wodurch die frischen Gase eindringen, und wenigstens eine Auslaßöffung (8) aufweist, wodurch die verbrannten Gase abgeführt werden, wobei letztere mit einer Auslaßstrecke in Verbindung steht über zwei verschiedene Auslaßleitungen (9, 13) und einen Drehschieber (12), der in der Lage ist, einerseits den Durchgangsquerschnitt der Auslaßöffnung (8) zu verändern, indem er diese in axialer Richtung des Zylinders (2) mehr oder weniger verschließt, und andererseits die verbrannten Gase selektiv zu der einen oder der anderen Leitung (9, 13) zu führen, wobei er zwischen die Auslaßöffnung und die Leitungen (9, 13) eingefügt ist, dadurch gekennzeichnet, daß sie darüber hinaus einen Resonator (15) aufweist, der mit der einen und/oder der anderen Auslaßleitung in Verbindung steht, wobei der Schieber (12) in der Lage ist, mehr oder weniger den Resonator (15) zu verschließen.

2. Kraftmaschine nach Anspruch 1, dadurch gekennzeichnet, daß der Resonator (15) die Form eines zylindrischen Hohlraumes (16) mit zu der des Zylinders (2) senkrechter Achse hat, der mit der einen und/oder der anderen Leitung (9, 13) durch einen Durchgang (17) mit geringerem Querschnitt als der des Hohlraumes (16) in Verbindung steht.

3. Kraftmaschine nach Anspruch 2, dadurch gekennzeichnet, daß dieser Durchgang (17) sich im wesentlichen senkrecht sowohl zur Achse des Hohlraumes (16) als auch zu der des Zylinders (2) erstreckt.

4. Kraftmaschine nach einem der Ansprüche 1 bis 3 mit mehreren Zylindern, dadurch gekennzeichnet, daß ein einziger, getrennter Resonator jedem Zylinder zugeordnet ist.

5. Kraftmaschine nach einem der Ansprüche 1 bis 4, dadurch gekennzeichnet, daß der Schieber (12) von Steuereinrichtungen betätigt wird, die nach typischen Parametern des Kraftmaschinenbetriebes wirken.

6. Kraftmaschine nach Anspruch 5, dadurch gekennzeichnet, daß die typischen Parameter des Kraftmaschinenbetriebes die Last und/oder die Leistung sind.

7. Kraftmaschine nach einem der Ansprüche 1 bis 6, dadurch gekennzeichnet, daß der Schieber (12) im Inneren einer im Gehäuse (1) ausgesparten Bohrung (11) rotiert, wobei die Bohrung(11) sich senkrecht zur Achse des Zylinders (2) erstreckt und direkt mit der Auslaßöffnung (8), den beiden Auslaßleitungen (9, 13) und dem Resonator (15) in Verbindung steht.

8. Kraftmaschine nach einem der Ansprüche 1 bis 7, dadurch gekennzeichnet, daß die eine (13) der beiden Leitungen, "erste Leitung" genannt, mit einem Startkatalysator (14) ausgerüstet ist.

9. Kraftmaschine nach Anspruch 8, dadurch gekennzeichnet, daß der Schieber (12) eine solche Form hat, daß er auf seinem Umlaufweg die zweite Leitung (9) in dem Maße zunehmend freigibt, in dem er die erste (13) verschließt, wobei der Resonator (15) verschlossen ist.

10. Kraftmaschine nach einem der Ansprüche 8 und 9, dadurch gekennzeichnet, daß der Schieber (12) eine solche Form hat, daß er auf seinem Umlaufweg den Resonator (15) in dem Maße zunehmend freilegt, in dem er die Ausgangsöffnung (8) verschließt, wobei die erste Leitung (13) verschlossen und die zweite (9) freigegeben ist.

11. Kraftmaschine nach einem der Ansprüche 1 bis 10 mit mehreren Zylindern, dadurch gekennzeichnet, daß die jedem Zylinder entsprechenden Schieber sich drehunbeweglich auf einer selben Welle befinden.

12. Kraftmaschine nach Anspruch 11, dadurch gekennzeichnet, daß die Schieber Bestandteil der Welle sind.

## Claims

1. Two-stroke internal combustion engine, of the pump crankcase type, comprising a crankcase (1) in which at least one cylinder (2) defining a combustion chamber is arranged, this cylinder having at least one intake port (7) through which the fresh gases enter and at least one exhaust port (8) through which the spent gases are discharged, the latter communicating with an exhaust line via two distinct exhaust pipes (9, 13), a rotary bush (12), capable on the one hand of modifying the passage section of the exhaust port (8) by blocking it to a greater or lesser degree in the axial direction of the cylinder (2) and on the other hand of directing the spent gases selectively towards one or other of said pipes (9, 13), being interposed between the exhaust port and these pipes (9, 13), characterised in that it further comprises a resonator (15) communicating with either or both of the exhaust pipes, the bush (12) being capable of blocking the resonator (15) to a greater or lesser degree.

2. Engine according to Claim 1, characterised in that the resonator (15) takes the form of a cylindrical cavity (16) with its axis perpendicular to that of the cylinder (2) communicating with either or both of the pipes (9, 13) via a passage (17) having a section smaller than that of the cavity (16).

3. Engine according to Claim 2, characterised in that said passage (17) extends substantially perpendicular both to the axis of the cavity (16) and to that of the cylinder (2).

4. Engine according to any one of Claims 1 to 3, comprising several cylinders, characterised in that a single distinct resonator is associated with each cylinder.

5. Engine according to any one of Claims 1 to 4, characterised in that the bush (12) is controlled by control means acting as a function of parameters representing the operation of the engine.

6. Engine according to Claim 5, characterised in that said parameters representing the operation of the engine are load and/or speed.

7. Engine according to any one of Claims 1 to 6, characterised in that the bush (12) revolves inside a bore hole (11) made in the crankcase (1), this bore hole (11) lying perpendicular to the axis of the cylinder (2) and communicating directly with the exhaust port (8), the two exhaust pipes (9, 13) and the resonator (15).

8. Engine according to any one of Claims 1 to 7, characterised in that one (13) of the two pipes, known as the "first pipe", is equipped with a starter catalyser (14).

9. Engine according to Claim 8, characterised in that the bush (12) is shaped such that, during its rotation, it progressively unblocks the second pipe (9) as and when it blocks the first (13), the resonator (15) being blocked.

10. Engine according to any one of Claims 8 and 9, characterised in that the bush (12) is shaped such that, during its rotation, it progressively uncovers the resonator (15) as and when it blocks the exhaust port (8), the first pipe (13) being blocked and the second one (9) unblocked.

11. Engine according to any one of Claims 1 to 10, comprising several cylinders, characterised in that the bushes corresponding to each cylinder are linked in rotation on the same shaft.

12. Engine according to Claim 11, characterised in that the bushes form an integral part of the shaft.
